# EUROPÄISCHE PATENTSCHRIFT

(11) **EP 1 923 285 B1**
(45) Veröffentlichungstag und Bekanntmachung des Hinweises auf die Patenterteilung: **19.08.2020**
(21) Anmeldenummer: 07022081.9
(22) Anmeldetag: 14.11.2007
(51) Int. Cl.: B60T 15/48, B60T 17/02

(54) **Vorrichtung mit Ventilgehäuse und Druckluftleitung**
Device with valve housing and compressed air line
Dispositif avec une boîte à clapets et une conduite d'air comprimé

(30) Priorität: 14.11.2006 DE 102006053839; 27.09.2007 DE 102007046168
(43) Veröffentlichungstag der Anmeldung: 21.05.2008
(73) Patentinhaber: KNORR-BREMSE Systeme für Nutzfahrzeuge GmbH, 80809 München (DE)
(72) Erfinder: Hilberer, Eduard, 68766 Hockenheim (DE); Reifinger, Günther, 82110 Germering (DE)
(74) Vertreter: Schönmann, Kurt

(56) Entgegenhaltungen:
- EP-A2- 0 945 663
- EP-A2- 1 714 846
- DE-A1- 2 120 099
- DE-A1- 3 237 872

## Beschreibung

Die Erfindung betrifft eine Vorrichtung mit einem Ventilgehäuse und mindestens einer mit einem Ventilgehäuseanschluss verbundenen Druckluftleitung.

Aus der DE 32 37 872 A1 ist eine Vorrichtung mit einem Ventilgehäuse und einer mit dem Ventilgehäuse verbundenen Druckleitung bekannt, wobei die Position der Druckleitung bezüglich des Ventilgehäuseanschlusses einen Versatz aufweist und eine Anschlussplatte vorgesehen ist, die einen Druckleitungsanschluss aufweist, wobei Dichtungen zwischen der Anschlussplatte und dem Ventilgehäuseanschluss sowie dem Druckleitungsanschluss vorgesehen sind.

Ventilgehäuse kommen beispielsweise im Rahmen der Druckluftversorgung von Nutzfahrzeugen zum Einsatz. Sie beherbergen insbesondere eine Mehrzahl von Ventilen. Diese erfüllen beispielsweise die Funktion eines so genannten Mehrkreisschutzventils, mit dem verschiedene Verbraucherkreise gegeneinander abgesichert werden und eine bestimmte Füllreihenfolge bei der Inbetriebnahme des Systems sichergestellt wird, sowie einen Druckregler. Die Ventile werden pneumatisch oder elektrisch angesteuert. Weiterhin sind elektrische und elektronische Komponenten, wie zum Beispiel Drucksensoren, Temperatursensoren und eine Heizung in dem Ventilgehäuse angeordnet. Auch eine elektronische Steuereinheit ist nützlicherweise in das Ventilgehäuse integriert oder an diesem montiert. An dem Ventilgehäuse ist dann auch vorzugsweise eine Lufttrocknereinheit angebaut, durch die die von einem Kompressor zugeführte Druckluft getrocknet und gereinigt wird. Insgesamt liegt ein kompliziertes System mit einer Vielzahl von zusammenwirkenden Komponenten vor. Wesentlich für derartige Ventilgehäuse ist, dass sie eine geeignete Schnittstelle für die Zuführung und Abführung von Druckluft aufweisen. Zu diesem Zweck werden die Druckluftleitungsanschlüsse in einer bestimmten Weise an einer oder mehreren Seiten des Ventilgehäuses angeordnet. Dies muss in einer Weise erfolgen, die den Anschluss der im Nutzfahrzeug zur Verfügung stehenden Druckluftleitungen ermöglicht. Hierdurch können unter Umständen Änderungen des Ventilgehäuseaufbaus erforderlich werden, da in verschiedenen Nutzfahrzeugen unterschiedliche Anordnungen für die Druckluftanschlüsse benötigt werden bzw. vorliegen. Aufgrund der Komplexität des Ventilgehäuses kann dies zu weit reichenden Konsequenzen führen: Die Verlegung eines einzigen Ventilgehäuseanschlusses kann ein vollständig neues Anschlusskonzept erforderlich machen.

Der Erfindung liegt die Aufgabe zugrunde, die Probleme des Standes der Technik zumindest teilweise zu überwinden, wobei insbesondere ein bestimmtes Ventilgehäuse ohne weiteres in verschiedenen Nutzfahrzeugen zum Einsatz kommen kann, auch wenn diese durch die Anordnung ihrer Druckluftleitungen verschiedene Anforderungen an das Anschlussmuster stellen.

Diese Aufgabe wird mit den Merkmalen des unabhängigen Anspruches gelöst.

Vorteilhafte Ausführungsformen der Erfindung sind in den abhängigen Ansprüchen angegeben.

Die Erfindung baut auf der gattungsgemäßen Vorrichtung dadurch auf, dass die Position der Druckluftleitung bezüglich des Ventilgehäuseanschlusses einen Versatz aufweist und dass mindestens eine Anschlussplatte vorgesehen ist, die einen Druckluftleitungsanschluss aufweist, wobei zwischen dem Druckluftleitungsanschluss und der Anschlussplatte eine erste Dichtung angeordnet ist und wobei zwischen der Anschlussplatte und dem Ventilgehäuse eine zweite Dichtung angeordnet ist, die einen an der Führung von Druckluft zwischen dem Ventilgehäuseanschluss und dem Druckluftleitungsanschluss beteiligten Druckluftkanal abdichtet. Durch eine solche Abschlussplatte kann ein Versatz zwischen einer Druckluftleitung und einem Anschluss des Ventilgehäuses ausgeglichen werden. Handelt es sich bei dem Ventilgehäuseanschluss beispielsweise um einen Druckluftausgang, so tritt die Druckluft aus diesem Ausgang aus, um dann über einen Kanal zu einem Druckluftanschluss der Anschlussplatte zu strömen. Dieser Druckluftanschluss ist bezüglich der Position der Druckluftleitung ausgerichtet, so dass durch eine Verbindung der Druckluftleitung mit dem Druckleitungsanschluss die Möglichkeit geschaffen wird, dem betreffenden Ventilgehäuseanschluss Druckluft zu entnehmen. Im Falle eines Ventilgehäuseeingangsanschlusses können entsprechende Vorteile erzielt werden.

Nützlicherweise ist vorgesehen, dass mehrere Druckluftleitungen und Ventilgehäuseanschlüsse vorgesehen sind und der Versatz der mindestens einen Druckluftleitung gegenüber dem Ventilgehäuseanschluss aus der relativen Lage der Druckluftleitungen und der Ventilgehäuseanschlüsse resultieren. Soll ein Ventilgehäuse, das mit einer bestimmten Anschlussplatte für den Einbau in ein bestimmtes Nutzfahrzeug mit einem bestimmten Druckluftleitungsmuster geeignet ist, in ein anderes Fahrzeug mit einem anderen Druckluftleitungsmuster eingebaut werden, so ist es lediglich erforderlich, eine andere Anschlussplatte zu verwenden.

Die Erfindung ist in besonders vorteilhafterweise dadurch gekennzeichnet , dass zwei Druckluftleitungen zur Versorgung der Betriebsbremskreise eines mit einer pneumatischen Bremsanlage ausgestatteten Nutzfahrzeugs und zwei Anschlussplatten vorgesehen sind, wobei die Druckluftleitungen zur Versorgung der Betriebsbremskreise jeweils verschiedenen Anschlussplatten zugeordnet sind. Die Anschlussplatten sind nützlicherweise an das Ventilgehäuse angeflanscht. Hierdurch liegt eine sichere Anbindung der Anschlussplatten und somit auch eine sichere Abdichtung der Druckluftkanäle vor. Kommt es dennoch zu Problemen mit einer Anschlussplatte und zu einem damit verbundenen Druckverlust, ist es von Vorteil, wenn dies nur einen der Betriebsbremskreise betrifft. Der andere Betriebsbremskreis wird über eine andere Anschlussplatte versorgt, die im Normalfall nach wie vor eine zuverlässige Abdichtung zur Verfügung stellt.

Es ist bevorzugt, dass die zweite Dichtung eine Formdichtung ist. Hierdurch können die Dichtungen in optimaler Weise an die Oberfläche des Ventilgehäuses angepasst werden, so dass auch eine komplizierte Kanalführung zwischen Ventilgehäuseanschluss und Druckluftleitungsanschluss der Anschlussplatte abgedichtet werden kann.

Besonders bevorzugt ist, dass die Formdichtung doppelte Dichtstege aufweist. Hierdurch liegt eine doppelte Absicherung gegen Druckluftleckagen vor.

Im Hinblick auf eine einfache Anbindung der Druckluftleitungen an das Ventilgehäuse beziehungsweise die Anschlussplatte ist vorgesehen, dass die Anschlussplatte eine schneidende Befestigungseinrichtung zum Halten der Druckluftleitung aufweist. Die meist aus Kunststoff bestehenden Druckluftleitungen müssen dann nur in den Druckluftanschluss eingesteckt werden, wobei Axialkräfte durch die schneidende Befestigungseinrichtung in die Anschlussplatte eingeleitet werden.

Ebenso kann es nützlich sein, dass die Anschlussplatte eine klemmende Befestigungseinrichtung zum Halten der Druckluftleitung aufweist.

Im Zusammenhang mit einer schneidenden oder klemmenden Befestigungseinrichtung ist es von besonderem Vorteil, dass die Befestigungseinrichtung die Druckluftleitung von Außen angreift und dass eine Stützhülse vorgesehen ist, die die Druckluftleitung gegen eine von der Befestigungseinrichtung aufgebrachte Kraft von Innen abstützt.

Bevorzugt ist vorgesehen, dass die Stützhülse in die Anschlussplatte integriert ist. Auch wenn die Stützhülse als separates Element vorgesehen sein kann, ist die Integration in die Anschlussplatte von Vorteil, insbesondere im Hinblick auf die Handhabbarkeit bei der Montage sowie der Verringerung der Anzahl von zu handhaben Bauteilen bei der Fertigmontage.

Die Erfindung betrifft weiterhin eine Anschlussplatte zur Verwendung in einer erfindungsgemäßen Vorrichtung.

Die Erfindung wird nun mit Bezug auf die begleitenden Zeichnungen anhand bevorzugter Ausführungsformen beispielhaft erläutert.

Es zeigen:
- Figur 1: eine Draufsicht auf eine erfindungsgemäße Vorrichtung;
- Figur 2: eine Schnittansicht einer ersten Ausführungsform einer erfindungsgemäßen Vorrichtung und
- Figur 3: eine Schnittansicht einer zweiten Ausführungsform einer erfindungsgemäßen Vorrichtung.

Bei der nachfolgenden Beschreibung bevorzugter Ausführungsformen der Erfindung bezeichnen gleiche Bezugszeichen gleiche oder vergleichbare Komponenten.

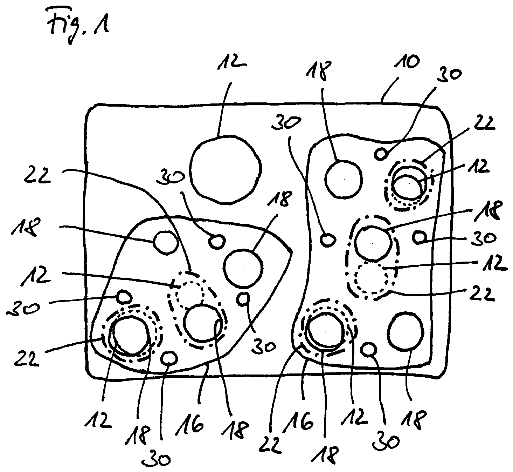

Figur 1 zeigt eine Draufsicht auf eine erfindungsgemäße Vorrichtung. Das Ventilgehäuse 10 weist mehrere Ventilgehäuseanschlüsse 12 auf. An dem Ventilgehäuse 12 sind zwei Anschlussplatten 16 befestigt. Die Befestigung erfolgt vorzugsweise flanschartig mittels Schraubverbindungen 30. Die Anschlussplatten 16 verdecken die Ventilgehäuseanschlüsse 12 teilweise, wobei die verdeckten Ränder der Ventilgehäuseanschlüsse durch unterbrochene Linien dargestellt sind. Die Anschlussplatten 16 weisen Druckluftleitungsanschlüsse 18 auf, an die in Figur 1 nicht dargestellte Druckluftleitungen anschließbar sind. Diese Druckluftleitungsanschlüsse 18 haben zumindest teilweise einen Versatz gegenüber den Ventilgehäuseanschlüssen 14, so dass das Anschlussbild des Ventilgehäuses 10 an ein von außen herangeführtes Anschlussbild von Druckluftleitungen angepasst wird. Um die Druckluftführung zwischen den Ventilgehäuseanschlüssen und den Druckluftleitungsanschlüssen 18 gegen die Atmosphäre und benachbarte Anschlüsse abzudichten, sind Formdichtungen 22 vorgesehen, die in der Darstellung gemäß Figur 1 zwar durch die Anschlussplatten 16 verdeckt sind, deren Positionierung aber durch Strich-Punkt-Linien 22 angedeutet ist.

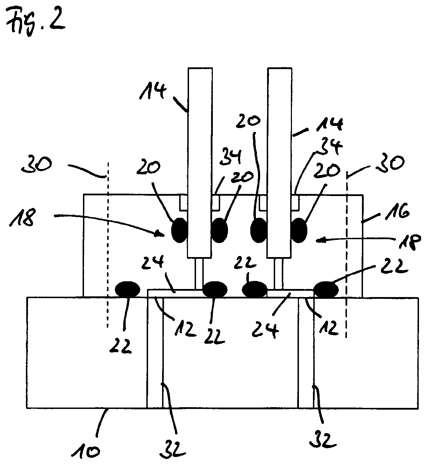

Figur 2 zeigt eine Schnittansicht einer ersten Ausführungsform einer erfindungsgemäßen Vorrichtung. Der Schnitt ist senkrecht zur Oberfläche der Ventileinrichtung geführt. Es ist erkennbar, dass die in Druckluftkanäle 32 des Ventilgehäuses 10 mündenden Ventilgehäuseanschlüsse 12 über Druckluftkanäle 24 mit in der Anschlussplatte 16 vorgesehenen Druckluftleitungsanschlüssen 18 verbunden sind. In die Druckluftleitungsanschlüsse 18 sind Druckluftleitungen 14 eingesteckt und über Sperrelemente 34 gegen einfaches Herausziehen gesichert. Im vorliegenden Ausführungsbeispiel sind die Druckluftkanäle 24 in die Anschlussplatte 16 integriert. Die Druckluftkanäle 24 sowie die gesamte Druckluftführung zwischen einem Kanal 32 im Ventilgehäuse 10 und einer Druckluftleitung 14 sind über Formdichtungen 22 abgedichtet. Die Kompression der Formdichtungen 22 erfolgt durch Schraubverbindungen 30, die die Anschlussplatte 16 mit dem Ventilgehäuse 10 verbinden, so dass eine flanschartige Anordnung vorliegt. Die Druckluftleitungen 14 sind im Bereich der Druckluftleitungsanschlüsse 18 durch Dichtringe 20 abgedichtet.

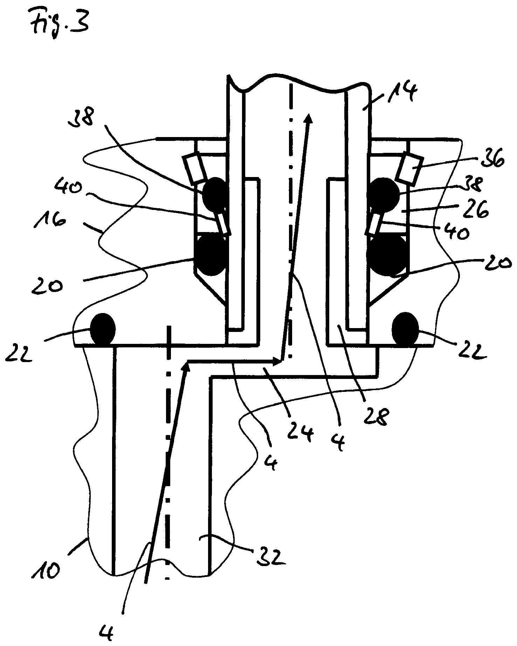

Figur 3 zeigt eine Schnittansicht einer zweiten Ausführungsform einer erfindungsgemäßen Vorrichtung. Der Schnitt ist senkrecht zur Oberfläche der Ventileinrichtung geführt. Hier ist eine beispielhafte Auslegung einer Befestigungseinrichtung 26 für die Druckluftleitung 14 in der Anschlussplatte 16 dargestellt. Die Befestigungseinrichtung 26 kann als schneidende und/oder klemmende Befestigungseinrichtung ausgelegt sein. Sie umfasst eine oder mehrere Verriegelungsnasen 36, die die Befestigungseinrichtung 26 in der Anschlussplatte 16 halten. Es können eine vollständig um die ringförmige Befestigungseinrichtung 26 umlaufende Befestigungsnase 36 oder mehrere abschnittsweise angeordnete Befestigungsnasen 36 vorgesehen sein. Die Befestigungseinrichtung 26 enthält weiterhin eine Dichtung 38, die mit der eingesteckten Druckluftleitung 14 wechselwirkt. Die Dichtung 38 ist vorzugsweise als O-Ring in einer Nut der Befestigungseinrichtung 26 angeordnet. Weiterhin sind eine oder mehrere Verriegelungen 40 vorgesehen, die ein Herausziehen der Druckluftleitung 14 aus der Anschlussplatte 16 verhindern. Eine solche Verriegelung kann wiederum vollständig umlaufend oder abschnittsweise angeordnet sein. Die Verriegelung 40 kann die Haltekraft durch Schneiden und/oder Klemmen aufbringen. Da die Haltekraft in jedem Fall eine radiale Kraftkomponente aufweisen wird, ist eine Stützhülse 28 vorgesehen, auf die die Druckluftleitung 14 aufgesteckt ist. Diese Stützhülse 28 verhindert eine unerwünschte Deformation der Druckluftleitung 14 aufgrund der durch die Verriegelungen 40 sowie allgemein durch die Befestigungseinrichtung 26 aufgebrachte radiale Kraftkomponente. Die Pfeile 42 zeigen die Druckluftströmung aus dem Kanal 32 des Ventilgehäuses 10 durch den Druckluftkanal 24 und die Druckluftleitung 14 am Beispiel eines Druckluftausgangs. Im Falle eines Drucklufteingangs ist die Strömung entgegengesetzt gerichtet. Um eine Druckluftleitung 14 von dem Druckluftleitungsanschluss zu trennen, wird eine geeignete, vorzugsweise metallische Hülse über die Druckluftleitung gestülpt, so dass die Verriegelung 40 nicht mehr mit der Druckluftleitung 14 wechselwirkt. Die Druckluftleitung 14 ist dann entnehmbar. Aufgrund der harten metallischen Oberfläche der Hülse kann die Verriegelung nicht in diese einschneiden. Die Hülse kann beispielsweise auch aus dünnem verformbarem Material gefertigt sein, so dass sie nach der Entnahme der Druckluftleitung durch radiale Kompression ebenfalls ohne weiteres entnehmbar ist. Die Neumontage einer Druckluftleitung 14 erfolgt dann wiederum durch schlichtes Einstecken der Druckluftleitung 14.

Im vorliegenden Ausführungsbeispiel gemäß Figur 3 ist der Druckluftkanal 24 in das Ventilgehäuse 10 eingearbeitet. Die Druckluftkanäle können auch teilweise in der Anschlussplatte 16 und teilweise in der Oberfläche des Ventilgehäuses 10 eingearbeitet sein. Eine Kanalführung in der Ventilplatte ermöglicht eine Reduzierung von Druckgussanhäufungen. Außerdem wird die Gefahr der Lunkerbildung verringert. Der Hintergrund dieser Problematik ist in der Herstellung des Ventilgehäuses durch Aluminiumdruckgussverfahren begründet. Bei der Herstellung von Ventilgehäusebereichen, in die viel Aluminium einfließt, ist es schwierig, die Luft aus dem Druckgusswerkzeug geordnet zu entlüften. Es kommt vielmehr zu Turbulenzen, so dass Luftblasen eingeschlossen werden. Außerdem kann es zu Spannungen im Gehäuse kommen. Dies ist zu berücksichtigen, wenn die Kanäle in die Anschlussplatten 16 integriert werden, da dann große Bereiche der Ventilgehäuseoberfläche mit Aluminium aufgefüllt werden müssen, was unter Umständen Schwierigkeiten bei der Fertigung mit sich bringt. Außerdem würde dies das Gewicht des Ventilgehäuses erhöhen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Ventilgehäuse
- 12: Ventilgehäuseanschluss
- 14: Druckluftleitung
- 16: Anschlussplatte
- 18: Druckluftleitungsanschluss
- 20: Dichtung
- 22: Dichtung
- 24: Druckluftkanal
- 26: Befestigungseinrichtung
- 28: Stützhülse
- 30: Schraubverbindung
- 32: Druckluftkanal
- 34: Sperrelemente
- 36: Befestigungsnase
- 38: Dichtung
- 40: Verriegelung
- 42: Druckluftströmung

## Patentansprüche

1. Vorrichtung mit einem Ventilgehäuse (10) und mindestens einer mit einem Ventilgehäuseanschluss (12) verbundenen Druckluftleitung (14), wobei die Position der Druckluftleitung (14) bezüglich des Ventilgehäuseanschlusses (12) einen Versatz aufweist und wobei mindestens eine Anschlussplatte (16) vorgesehen ist, die einen Druckluftleitungsanschluss (18) aufweist, wobei zwischen dem Druckluftleitungsanschluss und der Anschlussplatte eine erste Dichtung (20) angeordnet ist und wobei zwischen der Anschlussplatte und dem Ventilgehäuse (10) eine zweite Dichtung (22) angeordnet ist, die einen an der Führung von Druckluft zwischen dem Ventilgehäuseanschluss und dem Druckluftleitungsanschluss beteiligten Druckluftkanal (24) abdichtet, **dadurch gekennzeichnet, dass** zwei Druckluftleitungen (14) zur Versorgung der Betriebsbremskreise eines mit einer pneumatischen Bremsanlage ausgestatteten Nutzfahrzeugs und zwei Anschlussplatten (16) vorgesehen sind, wobei die Druckluftleitungen zur Versorgung der Betriebsbremskreise jeweils verschiedenen Anschlussplatten zugeordnet sind.

2. Vorrichtung nach Anspruch 1, **dadurch gekennzeichnet, dass** mehrere Druckluftleitungen (14) und Ventilgehäuseanschlüsse (12) vorgesehen sind und der Versatz der mindestens einen Druckluftleitung gegenüber dem Ventilgehäuseanschluss aus der relativen Lage der Druckluftleitungen und der Ventilgehäuseanschlüsse resultieren.

3. Vorrichtung nach einem der vorangehenden Ansprüche, **dadurch gekennzeichnet, dass** die zweite Dichtung (22) eine Formdichtung ist.

4. Vorrichtung nach Anspruch 3, **dadurch gekennzeichnet, dass** die Formdichtung (22) doppelte Dichtstege aufweist.

5. Vorrichtung nach einem der vorangehenden Ansprüche, **dadurch gekennzeichnet, dass** die Anschlussplatte (16) eine schneidende Befestigungseinrichtung (26) zum Halten der Druckluftleitung (14) aufweist.

6. Vorrichtung nach einem der vorangehenden Ansprüche, **dadurch gekennzeichnet, dass** die Anschlussplatte eine klemmende Befestigungseinrichtung (26) zum Halten der Druckluftleitung aufweist.

7. Vorrichtung nach Anspruch 5 oder 6, **dadurch gekennzeichnet, dass** die Befestigungseinrichtung (26) die Druckluftleitung (14) von Außen angreift und dass eine Stützhülse (28) vorgesehen ist, die die Druckluftleitung gegen eine von der Befestigungseinrichtung aufgebrachte Kraft von Innen abstützt.

8. Vorrichtung nach Anspruch 7, **dadurch gekennzeichnet, dass** die Stützhülse (28) in die Anschlussplatte (16) integriert ist.

9. Anschlussplatte (16) zur Verwendung in einer Vorrichtung nach einem der vorangehenden Ansprüche.

## Claims

1. Device with a valve housing (10) and at least one compressed-air line (14) connected to a valve housing connection (12), wherein the position of the compressed-airline (14) relative to the valve housing connection (12) is offset and wherein at least one connection plate (16) is provided, which has a compressed-air line connection (18), wherein between the compressed-air line connection and the connection plate a first seal (20) is arranged, and wherein between the connection plate and the valve housing (10) a second seal (22) is arranged, which seals off a compressed-air duct (24) that is involved in the guiding of compressed air between the valve housing connection and the compressed-air line connection, **characterised in that** two compressed-air lines (14) for supplying the service brake circuits of a utility vehicle fitted with a pneumatic brake system and two connection plates (16) are provided, and the compressed-air lines for supplying the service brake circuits are respectively associated with different connection plates.

2. Device according to Claim 1, **characterised in that** a plurality of compressed-air lines (14) and valve housing connections (12) are provided, and the offset of the at least one compressed-air line relative to the valve housing results from the relative position of the - compressed-air lines and the valve housing connections.

3. Device according to either of the preceding claims, **characterised in that** the second seal (22) is a moulded seal.

4. Device according to Claim 3, **characterised in that** the moulded seal (22) has double sealing webs.

5. Device according to any of the preceding claims, **characterised in that** the connection plate (16) comprises a knife-edge type fastening device (26) for holding the compressed-air line (14).

6. Device according to any of the preceding claims, **characterised in that** the connection plate comprises a clamp-type fastening device (26) for holding the compressed-air line.

7. Device according to Claims 5 or 6, **characterised in that** the fastening device (26) engages with the compressed-air line (14) from the outside and a protective sleeve (28) is provided which, from the inside, protects the compressed-air line against a force applied by the fastening device.

8. Device according to Claim 7, **characterised in that** the protective sleeve (28) is integrated in the connection plate (16).

9. Connection plate (16) for use in a device according to any of the preceding claims.

## Revendications

1. Système comprenant un boîtier (10) de vanne et au moins un conduit (14) pour de l'air comprimé relié à un raccord (12) du corps de vanne, dans lequel la position du conduit (14) pour de l'air comprimé, par rapport au raccord (12) du corps de vanne, a un déport et dans lequel il est prévu au moins une plaque (16) de raccordement, qui a un raccord (18) de conduit d'air comprimé, dans lequel, entre le raccord de conduit d'air comprimé et la plaque de raccordement, est monté un premier joint (20) et dans lequel, entre la plaque de raccordement et le corps (10) de vanne, est monté un deuxième joint (22), qui rend étanche un canal (24) pour de l'air comprimé participant à la conduite de l'air comprimé entre le raccord de corps de vanne et le raccord de conduit pour de l'air comprimé, caractérisé en 'ce qu'il est prévu deux conduits (14) pour de l'air comprimé, pour l'alimentation du circuit de frein de service d'un véhicule utilitaire équipé d'une installation de frein pneumatique, et deux plaques (16) de raccordement, les conduits pour de l'air comprimé étant, pour l'alimentation du circuit de frein de service, associés, respectivement, à des plaques de raccordement différentes.

2. Système suivant la revendication 1, **caractérisé en ce qu'**il est prévu plusieurs conduits (14) pour de l'air comprimé et des raccords (12) de corps de vanne et le déport du au moins un conduit pour de l'air comprimé, par rapport au raccord de corps de vanne, provient de la position relative des conduits pour de l'air comprimés et des raccords de corps de vanne.

3. Système suivant l'une des revendications précédentes, **caractérisé en ce que** le deuxième joint (22) est un joint moulé.

4. Système suivant la revendication 3, **caractérisé en ce que** le joint (22) moulé a des rainures d'étanchéité doubles.

5. Système suivant l'une des revendications précédentes, **caractérisé en ce que** la plaque (16) de raccordement a un dispositif (26) de fixation coupant pour retenir le conduit (14) pour de l'air comprimé.

6. Système suivant l'une des revendications précédentes, **caractérisé en ce que** la plaque de raccordement a un dispositif (26) de fixation serrant pour maintenir le conduit pour de l'air comprimé.

7. Système suivant la revendication 5 ou 6, **caractérisé en ce que** le dispositif (26) de fixation attaque de l'extérieur le conduit (14) pour de l'air comprimé et **en ce qu'**il est prévu un manchon (28) d'appui, qui appuie de l'extérieur le conduit pour de l'air comprimé à l'encontre d'une force appliquée par le dispositif de fixation.

8. Système suivant la revendication 7, **caractérisé en ce que** le manchon (28) d'appui est intégré à la plaque (16) de raccordement.

9. Plaque (16) de raccordement à utiliser dans un système suivant l'une des revendications précédentes.
